# EUROPEAN PATENT SPECIFICATION

(11) **EP 4 250 274 B1**
(45) Date of publication and mention of the grant of the patent: **07.10.2026**
(21) Application number: 21919279.6
(22) Date of filing: 13.01.2021
(51) Int. Cl.: G09C 1/00, G06F 21/62, H04L 9/08, H04L 9/00

(54) **SECURE RELATIONAL ALGEBRA OPERATION SYSTEM, SECURE COMPUTING DEVICE, SECURE RELATIONAL ALGEBRA OPERATION METHOD, AND PROGRAM**
SICHERES RELATIONALES ALGEBRA-BETRIEBSSYSTEM, SICHERE DATENVERARBEITUNGSVORRICHTUNG, SICHERES RELATIONALES ALGEBRA-BETRIEBSVERFAHREN UND PROGRAMM
SYSTÈME D'OPÉRATION D'ALGÈBRE RELATIONNELLE SÉCURISÉ, DISPOSITIF DE CALCUL SÉCURISÉ, PROCÉDÉ D'OPÉRATION D'ALGÈBRE RELATIONNELLE SÉCURISÉ, ET PROGRAMME

(43) Date of publication of application: 27.09.2023
(73) Proprietor: NTT, Inc., Tokyo 100-8116 (JP)
(72) Inventor: SUDO, Hiroki, Musashino-shi, Tokyo 180-8585 (JP); IKARASHI, Dai, Musashino-shi, Tokyo 180-8585 (JP)
(74) Representative: MERH-IP Matias Erny Reichl Hoffmann Patentanwälte PartG mbB
(86) International application number: PCT/JP2021/000793
(87) International publication number: WO 2022/153383

(56) References cited:
- US-A1- 2020 242 234
- NIKOLAJ VOLGUSHEV ET AL: "Conclave", 20190325; 1077952576 - 1077952576, 25 March 2019 (2019-03-25), pages 1 - 18, XP058428782, ISBN: 978-1-4503-6281-8, DOI: 10.1145/3302424.3303982
- JAJODIA SUSHIL ET AL: "Numerical SQL Value Expressions Over Encrypted Cloud Databases", 11 August 2015, 20150811, PAGE(S) 455 - 478, XP047645136
- WENTING ZHENG ET AL: "Opaque: An Oblivious and Encrypted Distributed Analytics Platform", 27 March 2017 (2017-03-27), pages 290 - 305, XP061025190, Retrieved from the Internet <URL:https://www.usenix.org/sites/default/files/nsdi17_proceedings_interior.pdf> [retrieved on 20170327]
- IGARASHI, DAI; HAMADA, KOKI; KIKUCHI, RYO: "We have not realized the most important thing - Designs and implementations of secure outer-join protocols", PROCEEDINGS OF COMPUTER SECURITY SYMPOSIUM 2018 (CSS2018), 15 October 2018 (2018-10-15), JP , pages 1221 - 1228, XP009525699
- "Database and Knowledge Discovery", 10 October 2013, CORONASHA CO., LTD., JP, ISBN: 978-4-339-02472-2, article KITAKAMI, HAJIME: "4.2.2. Relational Algebra Expressions, with Examples", pages: 53 - 55, XP009548449
- KOKI HAMADA, RYO KIKUCHI, DAI IKARASHI, KOJI CHIDA: "2C2-2: Table-size-hiding Equijoin on Secure Function Evaluation", PROCEEDINGS OF THE 2013 SYMPOSIUM ON CRYPTOGRAPHY AND INFORMATION SECURITY; JANUARY 22-25, 2013, 22 January 2013 (2013-01-22), JP, pages 1 - 6, XP009546463

## Description

### TECHNICAL FIELD

The present invention relates to a secure computation technique, and in particular, to a technique for performing secure computation of a relational algebraic operation.

### BACKGROUND ART

A database management system (DBMS) is a system that accumulates a large amount of data and efficiently processes the data, and is an important base system used for data analysis and preprocessing of data analysis. When an integrated data analysis, which is considered as a promising application for secure computation, is performed, not only analytical systems that performs statistical analysis and machine learning or the like, but also a database management system that manages integrated data are required as subsystems.

The target of the present invention is a relational database management system (RDBMS) among database management systems. The relational database management system is a database management system that handles data in a table format, and can search for and change data according to a query from a user. The query is expressed in a query language based on a relational algebraic operation. A typical example of such a query language is a structured query language (SQL).

Examples of research that reports implementation of a database management system using secure computation include Non-Patent Literature 1 and Non-Patent Literature 2.

Non-Patent Literature 3 generally presents Conclave, an MPC-enabled query compiler that makes MPC on "big data" accessible and efficient. Non-Patent Literature 4 discloses a distributed data analytics platform wherein distributed oblivious relational operators hide access patterns.

### PRIOR ART LITERATURE

### NON-PATENT LITERATURE

Non-Patent Literature 1: Naoto KIRIBUCHI, and Dai IKARASHI, "Design of a Database System Processable Under Keeping Data Confidentiality", CSS2015, pp. 419-426, 2015.
Non-Patent Literature 2: Yusuke ISHIDA, Atsushi KUNII, Junichi OKETANI, Satsuya OHATA, Takahiro MATSUDA, Nuttapong Attrapadung, and Goichiro HANAOKA, "Query Ahead: Design and implementation of a secure DB query system capable of easy description", SCIS2020, pp. 1-8, 2020.
Non-Patent Literature 3: NIKOLAJ VOLGUSHEV ET AL: "Conclave", 20190325; 1077952576 - 1077952576, 25 March 2019, pages 1-18.
Non-Patent Literature 4: JAJODIA SUSHIL ET AL: "Numerical SQL Value Expressions Over Encrypted Cloud Databases", 11 August 2015 PAGE(S) 455 - 478.
Non-Patent Literature 4: WENTING ZHENG ET AL: "Opaque: An Oblivious and Encrypted Distributed Analytics Platform",USENIX, USENIX, THE ADVANCED COMPUTING SYSTEMS ASSOCIATION, 27 March 2017 (2017-03-27), pages 290-305, XP061025190.

### SUMMARY OF THE INVENTION

### PROBLEMS TO BE SOLVED BY THE INVENTION

Database processing in the relational database management system can be regarded as repetition of a composite of relational algebraic operations. Considering g(f(·)) which is a composite of two relational algebraic operations f and g, one of the methods of configuring g(f(·)) by secure computation is replacing the relational algebraic operations f and g with protocols f_{sec} and g_{sec} that keeps data completely secret and configuring g_{sec} (f_{sec} ([ · ]). Here, [·] indicates that a value · is encrypted.

However, in the relational algebraic operations used in the database management system, there are many cases where the number of output rows is smaller than the number of input rows (for example, as a result of summation, subtraction, intersection, restriction, combination, summarization, or the like). In a case where such a relational algebraic operation is implemented by secure computation while keeping the number of rows secret, dummy rows are inserted into an operation result. For this reason, even in a case where the number of valid rows of the operation result is small, the apparent number of output rows increases. As a result, there is a problem that a computation cost of subsequent processing on the operation result increases.

In view of the above technical problems, an object of the present invention is to reduce a computation cost for performing secure computation of a composite of relational algebraic operations.

### MEANS TO SOLVE THE PROBLEM

In order to solve the above problems, the present invention provides a secure relational algebraic operation system, a secure computation apparatus, secure relational algebraic operation methods, and a program, having the features of the respective independent claims. The embodiments are defined in the dependent claims.

According to a first example not encompassed by the claims but useful for understanding the present invention, there is provided a secret relational algebraic operation system that performs secure computation of a composite of relational algebraic operations on an operation target input table, the secure relational algebraic operation system including a plurality of secure computation apparatuses, in which each secure computation apparatus includes a relational algebraic operation unit that performs secure computation of the relational algebraic operation on the input table or an intermediate table, and a valid row extraction unit that generates the intermediate table obtained by extracting a valid row from an operation result of the relational algebraic operation.

According to a second example not encompassed by the claims but useful for understanding the present invention, there is provided a secure computation apparatus that performs secure computation of a composite of relational algebraic operations on an operation target input table, the secure computation apparatus including: a relational algebraic operation unit that performs secure computation of the relational algebraic operation on the input table or an intermediate table; and a valid row extraction unit that generates the intermediate table obtained by extracting a valid row from an operation result of the relational algebraic operation.

### EFFECTS OF THE INVENTION

According to the present invention, an operation result of a preceding relational algebraic operation that is to be input to a subsequent relational algebraic operation includes only valid rows. Therefore, it is possible to reduce a computation cost for performing secure computation of a composite of relational algebraic operations.

### BRIEF DESCRIPTION OF THE DRAWINGS

FIG. 1 is a diagram illustrating a functional configuration of a secure relational algebraic operation system.
FIG. 2 is a diagram illustrating a functional configuration of a secure computation apparatus.
FIG. 3 is a diagram illustrating a processing procedure of a secure relational algebraic operation method.
FIG. 4 is a diagram illustrating a functional configuration of a computer.

### DETAILED DESCRIPTION OF THE EMBODIMENTS

Hereinafter, an embodiment of the present invention will be described in detail. In the drawings, components having the same functions are denoted by the same reference numerals, and redundant description will be omitted.

### [Notations]

Notations in this specification will be described. A vector is denoted by an alphabetic lower case (for example, x). An i-th element of a vector x is represented by xᵢ. σ(x) represents a vector obtained by permutating the vector x by permutation σ. A two-dimensional array (table) is denoted by an alphabetic upper case (for example, X). A value obtained by encrypting the value x is denoted by [x]. Further, a vector obtained by encrypting each element of the vector x is also denoted by [x]. A table obtained by encrypting each element of the table X is denoted by [X].

### [Terms]

Hereinafter, definitions of terms used in this specification will be described.

### <Secure Computation>

Secure computation is a generic term for a technique of performing predetermined computation while keeping data secret. A specific implementation method includes, for example, a method based on secret sharing. The secret sharing is an encryption method in which data is divided into a plurality of values and the values are shared by a plurality of parties. The secret sharing that can be used for secure computation includes (k, n) threshold secret sharing. The (k, n) threshold secret sharing is a secret sharing method having a property in which data is divided into n random values (referred to as "shares"), original data can be reconstructed in a case where k or more shares are collected, and information of the original data cannot be obtained from less than k shares. The known (k, n) threshold secret sharing includes Shamir secret sharing (refer to Reference Document 1) and reproduction secret sharing (refer to Reference Documents 2 and 3).
[Reference Document 1] Adi Shamir, "How to share a secret", Communications of the ACM, Vol. 22, No. 11, pp. 612-613, 1979.
[Reference Document 2] Mitsuru Ito, Akira Saito, and Takao Nishizeki, "Secret sharing scheme realizing general access structure", Electronics and Communications in Japan (Part III: Fundamental Electronic Science), Vol. 72, No. 9, pp. 56-64, 1989.
[Reference Document 3] Ronald Cramer, Ivan Damgard, and Yuval Ishai, "Share conversion, pseudorandom secret-sharing and applications to secure computation", Theory of Cryptography Conference, pp. 342-362. Springer, 2005.

In this specification, an embodiment in which data is encrypted by the (k, n) threshold secret sharing, which is a kind of secret sharing, will be described. In addition to secure computation based on the secret sharing, there is secure computation based on homomorphic encryption or a Garbled Circuit. The present invention can be used without assuming a specific implementation method.

### <Random Permutation>

The random permutation is a protocol for shuffling a one-dimensional array (vector) by random permutation σ. The random permutation can also be applied to a two-dimensional array (table). In this specification, an operation of shuffling a table [X], in which a two-dimensional array X is kept secret, by permutation σ is described as σ[X] ← RANDPERM([X]). In this case, the expression indicates that permutation is performed on each column of the two-dimensional array X by the same random permutation σ.

As a method for implementing a secret random permutation algorithm, for example, Reference Document 4 is known. Reference Document 4 discloses an algorithm based on a secret sharing method, but there is an obvious method that is not based on a secret sharing method, for example, random permutation using a logic circuit with random numbers.

[Reference Document 4] Dai IKARASHI, Koki HAMADA, Ryo KIKUCHI, and Koji CHIDA, "Improvement of cardinal number sorting in secure computation aiming at statistical processing of 1 second response in Internet environment", SCIS2014, pp. 1-8, 2014.

### <Reconstruction>

The reconstruction is an operation of obtaining the original value (or vector) x by reconstructing a secret sharing value (or vector) [x]. In this specification, this operation is described as x ← REVEAL ([x]).

### [EMBODIMENT]

A secure relational algebraic operation system according to the embodiment is an information processing system that executes a secure relational algebraic operation protocol for performing secure computation of a composite g (f(·)) of relational algebraic operations f and g under a condition that data is kept secret except for the number of rows. Here, the secure relational algebraic operation protocol is a versatile protocol that does not depend on the relational algebraic operations f and g.

In the present embodiment, as such a protocol, a method of configuring g_{sec} (ϕ (f_{sec} ([R]))) by inserting a row reduction protocol ϕ that maintains only valid rows between the relational algebraic operations f and g is adopted. Here, R ∈ P, and P represent a class of a record set. In the relational algebraic operation, arbitrary operations f and g are expressed as mapping of f, g: P → P. Thus, in a case where the row reduction protocol ϕ on [P] in which an element of P is kept secret can be well designed, the row reduction protocol related to the composite of the arbitrary operations f and g can be uniformly implemented by one algorithm ϕ.

Examples of a method for implementing such an algorithm ϕ include the following row reduction protocol. First, the row reduction protocol performs random permutation on a table obtained by linking an operation result and a flag column indicating a row to be selected, and then reveals (reconstructs) only the permutated flag column. Then, among the rows of the table obtained by performing random permutation, only the row of which the flag is true is maintained based on the revealed flag. Here, in a case where the valid row is selected from the output of the relational algebraic operation f in the flag column, only the valid row can be maintained without revealing data other than the number of the rows based on safety of the secret random permutation algorithm.

### Protocol 1: row reduction protocol ϕ

Input: [X], [e] (here, X is a table of which the number of rows is n and the number of columns is m, and e is a flag column having a length n and in which 1 is stored at a position corresponding to a row to be selected and 0 is stored at a position other than the row to be selected)
Output: [X'] (here, X' is a table of which the number of rows is n' (< n) and the number of columns is m)
   1 : $\left.σ\left(\left[X\right]\right)\right‖ σ \left(\left[e\right]\right) ← RANDPERM \left(\left.\left[X\right]\right‖\left[e\right]\right)$
   2 : $σ \left(e\right) ← REVEAL \left(σ\left(\left[e\right]\right)\right)$
   3: Configure [X'] in which only n' records σ([X]ᵢ) such that σ (eᵢ) = 1 are selected
   4: return [X']

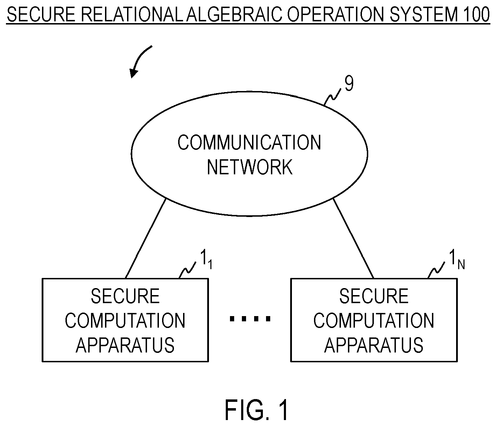

As illustrated in FIG. 1, the secure relational algebraic operation system 100 according to the embodiment includes N (≥ 1) secure computation apparatuses 1₁, ..., and 1_{N}. In a case where the secure relational algebraic operation system 100 is configured with a plurality of (N ≥ 2) secure computation apparatuses, the secure computation apparatuses may perform processing in cooperation with each other. In the embodiment, each of the secure computation apparatuses 1₁, ..., 1_{N} is connected to a communication network 9. The communication network 9 is a circuit-switching or packet-switching communication network configured such that the connected apparatuses can perform communication with each other, and for example, the Internet, a local area network (LAN), a wide area network (WAN), or the like can be used. Note that each apparatus does not necessarily need to perform online communication via the communication network 9. For example, information to be input to the secure computation apparatus 1ᵢ (i = 1, ..., N) may be stored in a portable recording medium such as a magnetic tape or a USB memory, and the information may be input in an offline manner from the portable recording medium to the secure computation apparatus 1ᵢ.

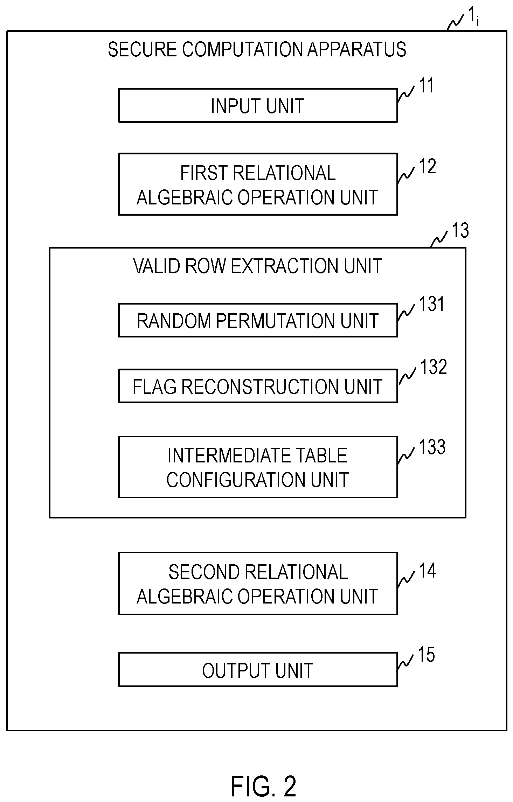

As illustrated in FIG. 2, the secure computation apparatus 1ᵢ included in the secure relational algebraic operation system 100 includes, for example, an input unit 11, a first relational algebraic operation unit 12, a valid row extraction unit 13, a second relational algebraic operation unit 14, and an output unit 15. The valid row extraction unit 13 includes, for example, a random permutation unit 131, a flag reconstruction unit 132, and an intermediate table configuration unit 133. The secure computation apparatus 1ᵢ performs processing of each step to be described later individually or in cooperation with another secure computation apparatus 1ᵢ, (i'= 1, ..., N, where i ≠ i'). Thereby, a secure relational algebraic operation method according to the embodiment is implemented.

The secure computation apparatus 1ᵢ is a special apparatus configured such that a special program is read by a known or dedicated computer including, for example, a central processing unit (CPU), a main storage device (random access memory (RAM)), and the like. For example, the secure computation apparatus 1ᵢ executes each processing under a control of the central processing unit. The data which is input to the secure computation apparatus 1ᵢ or the data obtained by each processing is stored in, for example, the main storage device. The data stored in the main storage device is loaded to the central processing unit, and is used for another processing as necessary. At least some of processing units of the secure computation apparatus 1ᵢ may be configured by hardware such as an integrated circuit.

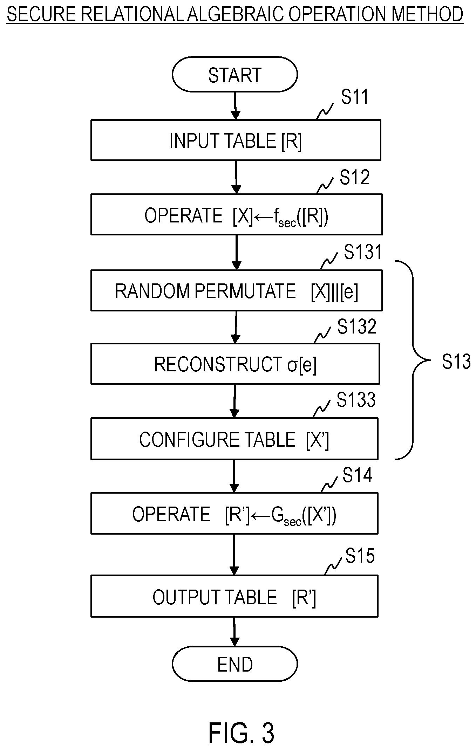

A processing procedure of a secure relational algebraic operation method to be executed by the secure relational algebraic operation system 100 according to the embodiment will be described with reference to FIG. 3.

In step S11, a ciphertext [R] obtained by encrypting a table R∈P as an operation target is input to the input unit 11 of each secure computation apparatus 1ᵢ. The table R is a table having n rows and m columns. The input unit 11 outputs the input ciphertext [R] of the table R to the first relational algebraic operation unit 12.

In step S12, the first relational algebraic operation unit 12 of each secure computation apparatus 1ᵢ receives the ciphertext [R] of the table R from the input unit 11, and computes a protocol f_{sec} for performing secure computation of a relational algebraic operation f. That is, f_{sec}([R]) is computed. f_{sec} outputs a ciphertext [X] that is to be reconstructed as a table X having n rows and m columns and a ciphertext [e] that is to be reconstructed as a vector e having a length n. The table X is an operation result of the relational algebraic operation f on the table R. In the table X, one or more dummy rows are inserted to keep the number of rows secret. The vector e is a flag column in which 1 is stored at a position corresponding to a valid row of the table X and 0 is stored at other positions (that is, positions of the dummy rows). The flag column e may be generated, for example, when f_{sec} inserts a dummy row. The first relational algebraic operation unit 12 outputs the ciphertext [X] of the table X and the ciphertext [e] of the flag column e to the valid row extraction unit 13.

In step S13, the valid row extraction unit 13 of each secure computation apparatus 1ᵢ receives the ciphertext [X] of the table X and the ciphertext [e] of the flag column e from the first relational algebraic operation unit 12, and generates a ciphertext [X'] that is to be reconstructed as an intermediate table X'. The intermediate table X' is a table obtained by extracting valid rows from the table X according to the flag column e. The valid row extraction unit 13 outputs the ciphertext [X'] of the intermediate table X' to the second relational algebraic operation unit 14.

Specifically, the valid row extraction unit 13 executes the following steps S131 to S133 for implementing the row reduction protocol ϕ.

In step S131, the random permutation unit 131 performs permutation on a table obtained by linking the ciphertext [X] of the table X and the ciphertext [e] of the flag column e, according to the random permutation σ. That is, σ[[X])||σ([e]) ← RANDPERM([X]||[e]) is executed.

In step S132, the flag reconstruction unit 132 reconstructs the flag column σ[e] obtained by performing random permutation. That is, σ(e) ← REVEAL (σ([e])) is executed.

In step S133, the intermediate table configuration unit 133 configures a ciphertext [X'] of the intermediate table X', from the table σ ([X]) obtained by performing random permutation, according to the reconstructed flag column e. Specifically, for i = 1, ..., n, a result obtained by extracting the row σ[Xᵢ] in which σ (eᵢ) = 1 is output as the ciphertext [X'] of the intermediate table X'.

In step S14, the second relational algebraic operation unit 14 of each secure computation apparatus 1ᵢ receives the ciphertext [X'] of the intermediate table X' from the valid row extraction unit 13, and operates a protocol g_{sec} for performing secure computation of a relational algebraic operation g. That is, g_{sec} ([X']) is operated. g_{sec} outputs a ciphertext [R'] that is to be reconstructed as a table R' having n' rows and m columns. The table R' is an operation result of the relational algebraic operation g on the intermediate table X', and is an operation result of a composite of the relational algebraic operations f and g on the input table R. In the table R', one or more dummy rows may be inserted to keep the number of rows secret. Or, all the rows of the table R' are valid rows, and dummy rows may not be inserted. The second relational algebraic operation unit 14 outputs the ciphertext [R'] of the table R' to the output unit 15.

In step S15, the output unit 15 of each secure computation apparatus 1ᵢ receives the ciphertext [R'] of the table R' from the second relational algebraic operation unit 14, and outputs the ciphertext [R'] as an output of the secure relational algebraic operation system 100.

### [MODIFICATION]

The secure relational algebraic operation system 100 according to the embodiment is configured to compute the composite g(f(·)) of the relational algebraic operations f and g once. It is also possible to implement an arbitrary query by repeating the composition of the relational algebraic operations. In this case, the second relational algebraic operation unit 14 outputs the ciphertext [e] of the flag column e indicating the valid row of the table R' together with the ciphertext [R'] of the table R' to the valid row extraction unit 13. Thereafter, processing of the valid row extraction unit 13 and the second relational algebraic operation unit 14 is repeatedly executed until a desired query is completed. When the desired query is completed, the second relational algebraic operation unit 14 outputs the then current ciphertext [R'] of the table R' to the output unit 15.

### [Effects]

In a case where an operation result which is input from a preceding relational algebraic operation to a subsequent relational algebraic operation includes only valid rows, information on the number of rows cannot be kept secret. However, the number of rows included in the operation result of the relational algebraic operation can be regarded as a statistical value, and thus it is considered that an influence of a leakage of privacy is small. On the other hand, in a case where the number of rows to be input is reduced, it is expected that performance of a subsequent relational algebraic operation will be greatly improved. For example, even when only one row is valid among outputs of 10 million rows of a relational algebraic operation, it is inevitable due to the definition to input 10 million rows of data into the subsequent relational algebraic operation to keep the number of rows secret. On the other hand, according to the configuration of the present invention, only one row is input to a subsequent relational algebraic operation. Therefore, the number of input rows can be reduced to 1/10,000,000. Indeed, as a result of executing the row reduction protocol ϕ in a multi-party computing system where the parties are three, it has been confirmed that overheads are sufficiently small compared to the reduceable execution time and that the row reduction protocol ϕ is effective in reducing the execution time.

It is a surprising result that it is possible to cover all combinations of very universal processing of a database by simply inserting one row reduction protocol ϕ as in the present invention. Indeed, although the processing itself used in the configuration of the present invention is mentioned in a plurality of documents, there is no reference related to the present invention, and the configuration of the present invention is unknown to those skilled in the art.

While the embodiment of the present invention has been described above, a specific configuration is not limited to the embodiment. The various kinds of processing described in the embodiment may be executed not only in chronological order according to the order described, but also in parallel or individually in accordance with processing capability of a device that executes the processing or as necessary.

### [PROGRAM AND RECORDING MEDIUM]

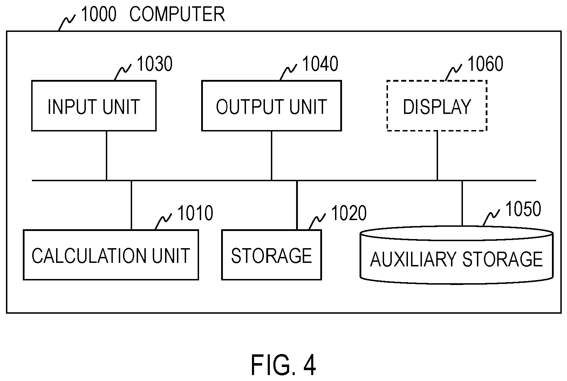

In a case where various types of processing functions in each apparatus described in the embodiment are implemented by a computer, processing content of the functions of each apparatus is described by a program. By causing a storage 1020 of a computer illustrated in FIG. 4 to load this program and causing a calculation unit 1010, an input unit 1030, an output unit 1040, and the like to execute the program, various kinds of processing functions in each of the apparatuses are implemented on the computer.

The program in which the processing content is described can be recorded in a computer-readable recording medium. The computer-readable recording medium is, for example, a non-transitory recording medium, and is a magnetic recording device, an optical disc, or the like.

Further, the program is distributed by, for example, selling, transferring, or renting a portable recording medium such as a DVD and a CD-ROM in which the program is recorded. Further, the program may be stored in a storage of a server computer, and the program may be distributed by transferring the program from the server computer to another computer via a network.

The computer that executes such a program, for example, first, temporarily stores the program recorded in a portable recording medium or the program transferred from a server computer in an auxiliary storage 1050 that is a non-transitory storage of the computer. In addition, when executing processing, the computer loads the program stored in the auxiliary storage 1050 that is a non-transitory storage of the computer, onto the storage 1020 that is a temporary storage device, and executes processing according to the loaded program. Further, as another embodiment of the program, a computer may directly load the program from a portable recording medium and execute processing according to the program, and a computer may sequentially execute processing according to the received program each time the program is transferred from a server computer to the computer. Further, the above-described processing may be executed by a so-called application service provider (ASP) type service that implements a processing function only by an execution instruction and result acquisition without transferring the program from the server computer to the computer. Note that the program according to the present embodiment includes information used for processing by an electronic computer and equivalent to the program (data or the like that is not a direct command to the computer but has property that defines processing of the computer).

Further, in the description above, the apparatus is so configured that it executes a predetermined program on a computer. On the other hand, at least some of the processing content may be implemented as hardware.

## Claims

1. A secure relational algebraic operation system (100) that performs secure computation of a database processing specified by a user consisting of a composite of relational algebraic operations on an operation target input table, the secure relational algebraic operation system comprising a plurality of secure computation apparatuses (1₁, ..., 1_{N}),
and each secure computation apparatus (1₁, ..., 1_{N}) includes
a relational algebraic operation unit (12) that performs secure computation of the relational algebraic operation on the input table or an intermediate table to obtain an operation result, and the relational algebraic operation unit (12) generates a first table that includes the operation result and a dummy row or dummy rows inserted in the operation result to keep the number of rows secret, and
a valid row extraction unit (13) that generates the intermediate table by extracting a valid row or valid rows from the first table while keeping the position of the dummy row or the dummy rows secret,
wherein
the relational algebraic operation unit (12) outputs a flag column indicating the valid row or the valid rows in the first table
and each secure computation apparatus (1₁, ..., 1_{N}) further includes
a random permutation unit (131) that performs secure computation of random permutation on a second table obtained by linking the first table and the flag column,
a flag reconstruction unit (132) that reconstructs the flag column obtained by performing the random permutation, and
an intermediate table configuration unit (133) that configures the intermediate table by extracting the valid row or the valid rows from the first table obtained by performing the random permutation according to the reconstructed flag column.

2. The secure relational algebraic operation system (100) according to claim 1,
wherein the secure relational algebraic operation system (100) performs secure computation of an arbitrary query on the input table by repeating the composition of the relational algebraic operations, and
repeatedly executes processing of the relational algebraic operation unit (12) and the valid row extraction unit (13) until the arbitrary query is completed.

3. A secure computation apparatus (1ᵢ) that performs secure computation of a database processing specified by a user consisting of a composite of relational algebraic operations on an operation target input table, the secure computation apparatus (1ᵢ) comprising:
a relational algebraic operation unit (12) that performs secure computation of the relational algebraic operation on the input table or an intermediate table to obtain an operation result, and the relational algebraic operation unit (12) generates a first table that includes the operation result and a dummy row or dummy rows inserted in the operation result to keep the number of rows secret, and
a valid row extraction unit (13) that generates the intermediate table by extracting a valid row or valid rows from the first table while keeping the position of the dummy row or the dummy rows secret,
wherein
the relational algebraic operation unit (12) outputs a flag column indicating the valid row or the valid rows in the first table,
and the secure computation apparatus (1ᵢ) further includes
a random permutation unit (131) that performs secure computation of random permutation on a second table obtained by linking the first table and the flag column,
a flag reconstruction unit (132) that reconstructs the flag column obtained by performing the random permutation, and
an intermediate table configuration unit (133) that configures the intermediate table by extracting the valid row or valid rows from the first table obtained by performing the random permutation according to the reconstructed flag column.

4. A secure relational algebraic operation method that is executed by a secure relational algebraic operation system including a plurality of secure computation apparatuses and performs secure computation of a database processing specified by a user consisting of a composite of relational algebraic operations on an operation target input table, the secure relational algebraic operation method comprising:
performing (S12), via a relational algebraic operation unit of each secure computation apparatus, secure computation of the relational algebraic operation on the input table or an intermediate table to obtain an operation result, generating a first table that includes the operation result and a dummy row or dummy rows inserted in the operation result to keep the number of rows secret, and
generating (S13), via a valid row extraction unit of each secure computation apparatus, the intermediate table by extracting a valid row or valid rows from the first table while keeping the position of the dummy row or the dummy rows secret
wherein the secure relational algebraic operation method further comprises:
outputting, via the relational algebraic operation unit, a flag column indicating the valid row or the valid rows in the first table,
performing, via a random permutation unit, secure computation of random permutation on a second table obtained by linking the first table and the flag column,
reconstructing, via a flag reconstruction unit, the flag column obtained by performing the random permutation, and
configuring, via an intermediate table configuration unit, the intermediate table by extracting the valid row or the valid rows from the first table obtained by performing the random permutation according to the reconstructed flag column.

5. A secure relational algebraic operation method that is executed by one secure computation apparatus and performs secure computation of a database processing specified by a user consisting of a composite of relational algebraic operations on an operation target input table, the secure relational algebraic operation method comprising:
performing (S12), via a relational algebraic operation unit of the secure computation apparatus, secure computation of the relational algebraic operation on the input table or an intermediate table to obtain an operation result, generating a first table that includes the operation result and a dummy row or dummy rows inserted in the operation result to keep the number of rows secret, and
generating (S13), via a valid row extraction unit of the secure computation apparatus, the intermediate table obtained by extracting a valid row or valid rows from the first table while keeping the position of the dummy row or the dummy rows secret,
wherein the secure relational algebraic operation method further comprises:
outputting, via the relational algebraic operation unit, a flag column indicating the valid row or the valid rows in the first table,
performing, via a random permutation unit, secure computation of random permutation on a second table obtained by linking the first table and the flag column,
reconstructing, via a flag reconstruction unit, the flag column obtained by performing the random permutation, and
configuring, via an intermediate table configuration unit, the intermediate table by extracting the valid row or the valid rows from the first table obtained by performing the random permutation according to the reconstructed flag column.

6. A program for causing a computer to execute each step of the secure relational algebraic operation method according to claim 4 or 5.

## Patentansprüche

1. Sicheres relational-algebraisches Operationssystem (100), das eine sichere Berechnung einer von einem Benutzer spezifizierten Datenbankverarbeitung durchführt, die aus einem Verbund von relational-algebraischen Operationen auf einer Operationszieleingabetabelle besteht, wobei das sichere relational-algebraische Operationssystem eine Vielzahl von Vorrichtungen (1₁, ..., 1_{N}) zur sicheren Berechnung aufweist,
und jede Vorrichtung (1₁, ..., 1_{N}) zur sicheren Berechnung Folgendes enthält:
eine relational-algebraische Operationseinheit (12), die eine sichere Berechnung der relational-algebraischen Operation auf der Eingabetabelle oder einer Zwischentabelle durchführt, um ein Operationsergebnis zu erhalten, und die relational-algebraische Operationseinheit (12) eine erste Tabelle erzeugt, die das Operationsergebnis und eine Dummy-Zeile oder Dummy-Zeilen enthält, die in das Operationsergebnis eingefügt sind, um die Anzahl von Zeilen geheim zu halten, und
eine Gültige-Zeilen-Extraktions-Einheit (13), welche die Zwischentabelle durch Extrahieren einer gültigen Zeile oder gültiger Zeilen aus der ersten Tabelle erzeugt, während die Position der Dummy-Zeile oder der Dummy-Zeilen geheim gehalten wird,
wobei
die relational-algebraische Operationseinheit (12) eine Flagspalte ausgibt, welche die gültige Zeile oder die gültigen Zeilen in der ersten Tabelle anzeigt,
und jede Vorrichtung (1₁, ..., 1_{N}) zur sicheren Berechnung ferner Folgendes enthält:
eine Zufallspermutationseinheit (131), die eine sichere Berechnung einer Zufallspermutation an einer zweiten Tabelle durchführt, die durch Verbinden der ersten Tabelle und der Flagspalte erhalten wird,
eine Flagrekonstruktionseinheit (132), welche die Flagspalte rekonstruiert, die durch Durchführen der Zufallspermutation erhalten wird, und
eine Zwischentabellenkonfigurationseinheit (133), welche die Zwischentabelle durch Extrahieren der gültigen Zeile oder der gültigen Zeilen aus der ersten Tabelle konfiguriert, die durch Durchführen der Zufallspermutation gemäß der rekonstruierten Flagspalte erhalten wird.

2. System (100) für eine sichere relational-algebraische Operation nach Anspruch 1,
wobei das System (100) für eine sichere relational-algebraische Operation eine sichere Berechnung einer beliebigen Abfrage an der Eingabetabelle durch Wiederholen der Zusammensetzung der relational-algebraischen Operationen durchführt, und
eine Verarbeitung der relational-algebraischen Operationseinheit (12) und der Gültige-Zeilen-Extraktions-Einheit (13) wiederholt ausführt, bis die beliebige Abfrage abgeschlossen ist.

3. Vorrichtung (1ᵢ) zur sicheren Berechnung, die eine sichere Berechnung einer von einem Benutzer spezifizierten Datenbankverarbeitung durchführt, die aus einem Verbund von relational-algebraischen Operationen auf einer Operationszieleingabetabelle besteht, wobei die Vorrichtung (1ᵢ) zur sicheren Berechnung Folgendes aufweist:
eine relational-algebraische Operationseinheit (12), die eine sichere Berechnung der relational-algebraischen Operation auf der Eingabetabelle oder einer Zwischentabelle durchführt, um ein Operationsergebnis zu erhalten, und die relational-algebraische Operationseinheit (12) eine erste Tabelle erzeugt, die das Operationsergebnis und eine Dummy-Zeile oder Dummy-Zeilen enthält, die in das Operationsergebnis eingefügt sind, um die Anzahl von Zeilen geheim zu halten, und
eine Gültige-Zeilen-Extraktions-Einheit (13), welche die Zwischentabelle durch Extrahieren einer gültigen Zeile oder gültiger Zeilen aus der ersten Tabelle erzeugt, während die Position der Dummy-Zeile oder der Dummy-Zeilen geheim gehalten wird,
wobei
die relational-algebraische Operationseinheit (12) eine Flagspalte ausgibt, welche die gültige Zeile oder die gültigen Zeilen in der ersten Tabelle anzeigt,
und die Vorrichtung (1ᵢ) zur sicheren Berechnung ferner Folgendes enthält:
eine Zufallspermutationseinheit (131), die eine sichere Berechnung einer Zufallspermutation an einer zweiten Tabelle durchführt, die durch Verbinden der ersten Tabelle und der Flagspalte erhalten wird,
eine Flagrekonstruktionseinheit (132), welche die Flagspalte rekonstruiert, die durch Durchführen der Zufallspermutation erhalten wird, und
eine Zwischentabellenkonfigurationseinheit (133), welche die Zwischentabelle durch Extrahieren der gültigen Zeile oder gültiger Zeilen aus der ersten Tabelle konfiguriert, die durch Durchführen der Zufallspermutation gemäß der rekonstruierten Flagspalte erhalten wird.

4. Sicheres relational-algebraisches Operationsverfahren, das von einem sicheren relational-algebraischen Operationssystem ausgeführt wird, das eine Vielzahl von Vorrichtungen zur sicheren Berechnung enthält und eine sichere Berechnung einer von einem Benutzer spezifizierten Datenbankverarbeitung durchführt, die aus einem Verbund von relational-algebraischen Operationen auf einer Operationszieleingabetabelle besteht, wobei das sichere relational-algebraische Operationsverfahren Folgendes aufweist:
Durchführen (S12) einer sicheren Berechnung der relational-algebraischen Operation auf der Eingabetabelle oder einer Zwischentabelle über eine relational-algebraische Operationseinheit jeder Vorrichtung zur sicheren Berechnung, um ein Operationsergebnis zu erhalten, Erzeugen einer ersten Tabelle, die das Operationsergebnis und eine Dummy-Zeile oder Dummy-Zeilen enthält, die in das Operationsergebnis eingefügt sind, um die Anzahl von Zeilen geheim zu halten, und
Erzeugen (S13) der Zwischentabelle über eine Gültige-Zeilen-Extraktions-Einheit jeder Vorrichtung zur sicheren Berechnung durch Extrahieren einer gültigen Zeile oder von gültigen Zeilen aus der ersten Tabelle, während die Position der Dummy-Zeile oder der Dummy-Zeilen geheim gehalten wird,
wobei das sichere relational-algebraische Operationsverfahren ferner Folgendes aufweist:
Ausgeben einer Flagspalte, welche die gültige Zeile oder die gültigen Zeilen in der ersten Tabelle anzeigt, über die relational-algebraische Operationseinheit,
Durchführen einer sicheren Berechnung einer Zufallspermutation an einer zweiten Tabelle, die durch Verbinden der ersten Tabelle und der Flagspalte erhalten wird, über eine Zufallspermutationseinheit,
Rekonstruieren der Flagspalte, die durch Durchführen der Zufallspermutation erhalten wird, über eine Flagrekonstruktionseinheit, und
Konfigurieren der Zwischentabelle über eine Zwischentabellenkonfigurationseinheit durch Extrahieren der gültigen Zeile oder der gültigen Zeilen aus der ersten Tabelle, die durch Durchführen der Zufallspermutation gemäß der rekonstruierten Flagspalte erhalten wird.

5. Sicheres relational-algebraisches Operationsverfahren, das von einer Vorrichtung zur sicheren Berechnung ausgeführt wird und eine sichere Berechnung einer von einem Benutzer spezifizierten Datenbankverarbeitung durchführt, die aus einem Verbund von relational-algebraischen Operationen auf einer Operationszieleingabetabelle besteht, wobei das sichere relational-algebraische Operationsverfahren Folgendes aufweist:
Durchführen (S12) einer sicheren Berechnung der relational-algebraischen Operation auf der Eingabetabelle oder einer Zwischentabelle über eine relational-algebraische Operationseinheit der Vorrichtung zur sicheren Berechnung, um ein Operationsergebnis zu erhalten, Erzeugen einer ersten Tabelle, die das Operationsergebnis und eine Dummy-Zeile oder Dummy-Zeilen enthält, die in das Operationsergebnis eingefügt sind, um die Anzahl von Zeilen geheim zu halten, und
Erzeugen (S13) der Zwischentabelle, die durch Extrahieren einer gültigen Zeile oder gültiger Zeilen aus der ersten Tabelle erhalten wird, während die Position der Dummy-Zeile oder der Dummy-Zeilen geheim gehalten wird, über eine Gültige-Zeilen-Extraktions-Einheit der Vorrichtung zur sicheren Berechnung,
wobei das sichere relational-algebraische Operationsverfahren ferner Folgendes aufweist:
Ausgeben einer Flagspalte, welche die gültige Zeile oder die gültigen Zeilen in der ersten Tabelle anzeigt, über die relational-algebraische Operationseinheit,
Durchführen einer sicheren Berechnung einer Zufallspermutation an einer zweiten Tabelle, die durch Verbinden der ersten Tabelle und der Flagspalte erhalten wird, über eine Zufallspermutationseinheit,
Rekonstruieren der Flagspalte, die durch Durchführen der Zufallspermutation erhalten wird, über eine Flagrekonstruktionseinheit, und
Konfigurieren der Zwischentabelle über eine Zwischentabellenkonfigurationseinheit durch Extrahieren der gültigen Zeile oder der gültigen Zeilen aus der ersten Tabelle, die durch Durchführen der Zufallspermutation gemäß der rekonstruierten Flagspalte erhalten wird.

6. Programm zum Bewirken, dass ein Computer jeden Schritt des sicheren relational-algebraischen Operationsverfahrens nach Anspruch 4 oder 5 ausführt.

## Revendications

1. Système d'opération algébrique relationnelle sécurisée (100) qui effectue un calcul sécurisé d'un traitement de base de données spécifié par un utilisateur consistant en un composite d'opérations algébriques relationnelles sur une table d'entrée cible d'opération, le système d'opération algébrique relationnelle sécurisée comprenant une pluralité d'appareils de calcul sécurisé (1₁, ..., 1_{N}),
et chaque appareil de calcul sécurisé (1₁, ..., 1_{N}) comprend
une unité d'opération algébrique relationnelle (12) qui effectue un calcul sécurisé de l'opération algébrique relationnelle sur la table d'entrée ou une table intermédiaire pour obtenir un résultat d'opération, et l'unité d'opération algébrique relationnelle (12) génère une première table qui comprend le résultat d'opération et une ligne fictive ou des lignes fictives insérées dans le résultat d'opération pour garder le nombre de lignes secrètes, et
une unité d'extraction de ligne valide (13) qui génère la table intermédiaire en extrayant une ligne valide ou des lignes valides de la première table tout en gardant la position de la ligne fictive ou des lignes fictives secrètes,
dans lequel
l'unité d'opération algébrique relationnelle (12) délivre en sortie une colonne de drapeau indiquant la ligne valide ou les lignes valides dans la première table
et chaque appareil de calcul sécurisé (1₁, ..., 1_{N}) comprend en outre
une unité de permutation aléatoire (131) qui effectue un calcul sécurisé de permutation aléatoire sur une seconde table obtenue en reliant la première table et la colonne de drapeau,
une unité de reconstruction de drapeau (132) qui reconstruit la colonne de drapeau obtenue en effectuant la permutation aléatoire, et
une unité de configuration de table intermédiaire (133) qui configure la table intermédiaire en extrayant la ligne valide ou les lignes valides de la première table obtenue en effectuant la permutation aléatoire selon la colonne de drapeau reconstruite.

2. Système d'opération algébrique relationnelle sécurisée (100) selon la revendication 1,
dans lequel le système d'opération algébrique relationnelle sécurisée (100) effectue un calcul sécurisé d'une requête arbitraire sur la table d'entrée en répétant la composition des opérations algébriques relationnelles, et
exécute de manière répétée le traitement de l'unité d'opération algébrique relationnelle (12) et de l'unité d'extraction de ligne valide (13) jusqu'à ce que la requête arbitraire soit terminée.

3. Appareil de calcul sécurisé (1ᵢ) qui effectue un calcul sécurisé d'un traitement de base de données spécifié par un utilisateur consistant en un composite d'opérations algébriques relationnelles sur une table d'entrée cible d'opération, l'appareil de calcul sécurisé (1ᵢ) comprenant :
une unité d'opération algébrique relationnelle (12) qui effectue un calcul sécurisé de l'opération algébrique relationnelle sur la table d'entrée ou une table intermédiaire pour obtenir un résultat d'opération, et l'unité d'opération algébrique relationnelle (12) génère une première table qui comprend le résultat d'opération et une ligne fictive ou des lignes fictives insérées dans le résultat d'opération pour garder le nombre de lignes secrètes, et
une unité d'extraction de ligne valide (13) qui génère la table intermédiaire en extrayant une ligne valide ou des lignes valides de la première table tout en gardant la position de la ligne fictive ou des lignes fictives secrètes,
dans lequel
l'unité d'opération algébrique relationnelle (12) délivre en sortie une colonne de drapeau indiquant la ligne valide ou les lignes valides dans la première table,
et l'appareil de calcul sécurisé (1ᵢ) comprend en outre
une unité de permutation aléatoire (131) qui effectue un calcul sécurisé de permutation aléatoire sur une seconde table obtenue en reliant la première table et la colonne de drapeau,
une unité de reconstruction de drapeau (132) qui reconstruit la colonne de drapeau obtenue en effectuant la permutation aléatoire, et
une unité de configuration de table intermédiaire (133) qui configure la table intermédiaire en extrayant la ligne valide ou les lignes valides de la première table obtenue en effectuant la permutation aléatoire selon la colonne de drapeau reconstruite.

4. Procédé d'opération algébrique relationnelle sécurisée qui est exécuté par un système d'opération algébrique relationnelle sécurisée comprenant une pluralité d'appareils de calcul sécurisé et effectue un calcul sécurisé d'un traitement de base de données spécifié par un utilisateur consistant en un composite d'opérations algébriques relationnelles sur une table d'entrée cible d'opération, le procédé d'opération algébrique relationnelle sécurisée comprenant :
l'exécution (S12), via une unité d'opération algébrique relationnelle de chaque appareil de calcul sécurisé, d'un calcul sécurisé de l'opération algébrique relationnelle sur la table d'entrée ou une table intermédiaire pour obtenir un résultat d'opération, la génération d'une première table qui comprend le résultat d'opération et une ligne fictive ou des lignes fictives insérées dans le résultat d'opération pour garder le nombre de lignes secrètes, et
la génération (S13), via une unité d'extraction de ligne valide de chaque appareil de calcul sécurisé, de la table intermédiaire en extrayant une ligne valide ou des lignes valides de la première table tout en gardant la position de la ligne fictive ou des lignes fictives secrètes,
dans lequel le procédé d'opération algébrique relationnelle sécurisée comprend en outre :
la délivrance en sortie, via l'unité d'opération algébrique relationnelle, d'une colonne de drapeau indiquant la ligne valide ou les lignes valides dans la première table,
l'exécution, via une unité de permutation aléatoire, d'un calcul sécurisé de permutation aléatoire sur une seconde table obtenue en reliant la première table et la colonne de drapeau,
la reconstruction, via une unité de reconstruction de drapeau, de la colonne de drapeau obtenue en effectuant la permutation aléatoire, et
la configuration, via une unité de configuration de table intermédiaire, de la table intermédiaire en extrayant la ligne valide ou les lignes valides de la première table obtenue en effectuant la permutation aléatoire selon la colonne de drapeau reconstruite.

5. Procédé d'opération algébrique relationnelle sécurisée qui est exécuté par un appareil de calcul sécurisé et effectue un calcul sécurisé d'un traitement de base de données spécifié par un utilisateur consistant en un composite d'opérations algébriques relationnelles sur une table d'entrée cible d'opération, le procédé d'opération algébrique relationnelle sécurisée comprenant :
l'exécution (S12), via une unité d'opération algébrique relationnelle de l'appareil de calcul sécurisé, d'un calcul sécurisé de l'opération algébrique relationnelle sur la table d'entrée ou une table intermédiaire pour obtenir un résultat d'opération, la génération d'une première table qui comprend le résultat d'opération et une ligne fictive ou des lignes fictives insérées dans le résultat d'opération pour garder le nombre de lignes secrètes, et
la génération (S13), via une unité d'extraction de ligne valide de l'appareil de calcul sécurisé, de la table intermédiaire obtenue en extrayant une ligne valide ou des lignes valides de la première table tout en gardant la position de la ligne fictive ou des lignes fictives secrètes,
dans lequel le procédé d'opération algébrique relationnelle sécurisée comprend en outre :
la délivrance en sortie, via l'unité d'opération algébrique relationnelle, d'une colonne de drapeau indiquant la ligne valide ou les lignes valides dans la première table,
l'exécution, via une unité de permutation aléatoire, d'un calcul sécurisé de permutation aléatoire sur une seconde table obtenue en reliant la première table et la colonne de drapeau,
la reconstruction, via une unité de reconstruction de drapeau, de la colonne de drapeau obtenue en effectuant la permutation aléatoire, et
la configuration, via une unité de configuration de table intermédiaire, de la table intermédiaire en extrayant la ligne valide ou les lignes valides de la première table obtenue en effectuant la permutation aléatoire selon la colonne de drapeau reconstruite.

6. Programme pour amener un ordinateur à exécuter chaque étape du procédé d'opération algébrique relationnelle sécurisée selon la revendication 4 ou 5.
